# EUROPEAN PATENT SPECIFICATION

(11) **EP 2 871 938 B1**
(45) Date of publication and mention of the grant of the patent: **03.10.2018**
(21) Application number: 13734742.3
(22) Date of filing: 04.07.2013
(51) Int. Cl.: A23C 3/02, A23J 3/08, A01J 9/00, A01J 11/00

(54) **A HOLDING TANK SYSTEM**
VORRATSTANKSYSTEM
SYSTÈME DE RÉSERVOIR DE STOCKAGE

(30) Priority: 13.07.2012 SE 1250827
(43) Date of publication of application: 20.05.2015
(73) Proprietor: Tetra Laval Holdings & Finance SA, 1009 Pully (CH)
(72) Inventor: LEUFSTEDT, Max, 237 31 Bjärred (SE)
(74) Representative: Tetra Pak - Patent Attorneys SE
(86) International application number: PCT/EP2013/064178
(87) International publication number: WO 2014/009256

(56) References cited:
- EP-A1- 0 556 101
- WO-A1-82/00748
- GB-A- 715 473
- GB-A- 1 096 778
- US-A- 3 934 821
- US-A- 4 944 167

## Description

### TECHNICAL FIELD

The present invention relates to a system associated with a holding tank for holding a liquid over a predefined time period. In particular, the system is suitable for use in food and/or dairy processing. Even more particularly, the holding tank is suitable for denaturing of protein for yoghurt.

### BACKGROUND

Current dairy processing systems commonly utilize a holding tube, also referred to as a holding cell, for denaturation of protein in the milk. The holding cell is usually made of stainless steel, and is configured in the shape of a hollow tubular spiral to save space and has a length and diameter dimensioned for a holding time of five minutes. The holding time of five minutes means that every milk unit passing the holding cell should at least spend five minutes in the holding cell in order to achieve a suitable level of denaturation. Temperature controlled milk flows to the holding cell, and then continues along the volutions of the holding cell until exiting the holding cell five minutes later.

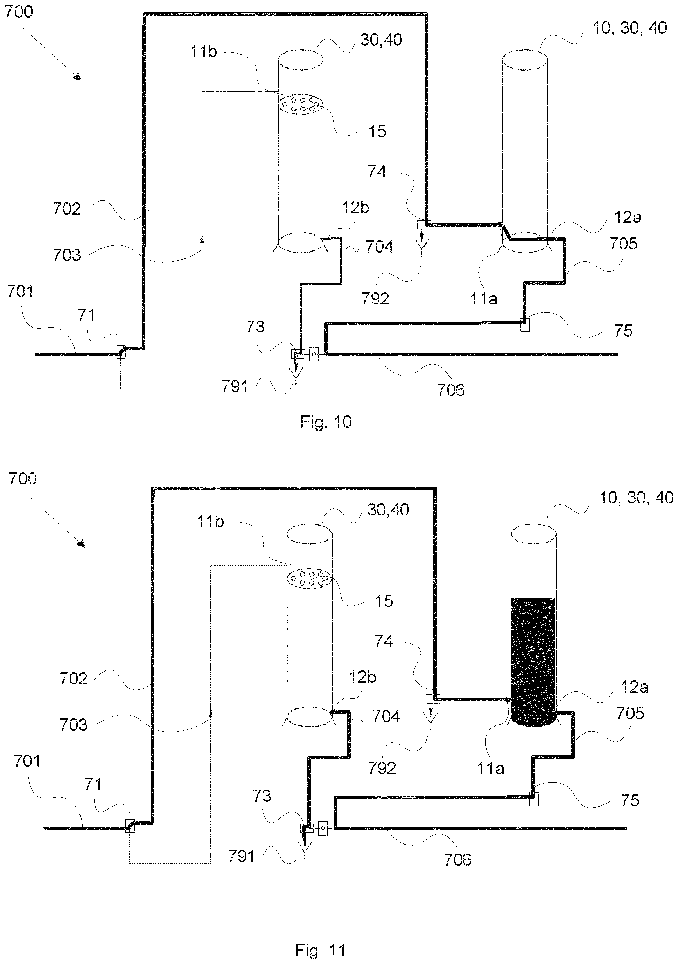

A typical plant design for pre-treatment for cultured milk products may be found in the "Dairy Processing Handbook", by G Bylund, ISBN:9163134276, Chapter 11, in particular Fig. 11.9 on page 261. In accordance with page 260 to 262 of this publication, the milk entering the holding cell usually holds a temperature of between 90 to 95 °C. Hot steam introduced after the heat plate exchanger and before the holding cell, may be used to heat the milk to the holding temperature of 90 to 95 °C. This holding temperature in combination with the five minutes holding time denatures about 70 - 80 % of the whey proteins (99 % of the β-lactoglobulin). The β-lactoglobulin, interacts with κ-casein, thereby helping to give the yoghurt a stable body. Based on the holding time and holding temperature the holding cell (i.e. holding tube 5 in Fig. 11.9 on page 261), is configured to improve the properties of the milk as a substrate for the bacteria culture, ensure that the coagulum of the finished yoghurt will be firm, and reduce the risk of whey separation in the end product. The holding cell is typically covered by a stainless steel hood to prevent people from being burnt when touching it and from radiation as well, as illustrated in Fig. 11.10 on page 262 of the Bylund publication. Milk entering the holding cell has already passed a preheating stage and is pasteurized, e.g. by passing through a plate heat exchanger, in such a way that all pathogenic microorganisms are killed. A minimum temperature/holding time of 72°C for 15 seconds in this stage must be achieved under current legal requirements, see Chapter 7, page 202 of the Bylund publication under Section "Some legal requirements".

A holding cell is very costly as it requires large amount of stainless steel. Furthermore, the configuration in the tubular spiral shape, as well as the stainless steel hood, also adds to the production costs.

Another drawback associated with current systems utilizing holding cells is that the mixed phase stage is long. Due to the length of the tubular section required in a holding cell a system utilizing a holding cell has a long mix phase, meaning that the water and milk, may mix together over a large distance while travelling through the pipe arrangement of the dairy processing system. For example, water and milk are mixed in the pipe arrangement of dairy processing systems, after all milk has been processed, whereby the water pushes the milk remaining in the pipe arrangement towards the end of the dairy processing system. While at least a portion of the pure milk of the water/milk phase solution may be extracted, this is a cumbersome process. Accordingly, a system with as short mix phase as possible is desired.

Furthermore, due to the length and design of current holding cells, a lot of water, and/or concentrated acid or caustic is required in the washing stage. Furthermore, a lot of steam is required in the sterilization stage.

Hence a solution overcoming or at least alleviating the problems associated with current solution mentioned above would be advantageous.

### SUMMARY

Accordingly, the present invention preferably seeks to mitigate, alleviate or eliminate one or more of the above-identified deficiencies in the art and disadvantages singly or in any combination and solves at least the above mentioned problems by providing a system according to claim 1 or 2 and a computer program product according to claim 14.

According to an aspect a holding tank for holding a liquid over a predefined time period is provided. The holding tank comprises an inlet for receiving the liquid. The holding tank further comprises an outlet for allowing liquid to exit the holding tank. Moreover, the holding tank comprises a distribution device for evenly dispersing the liquid received through the inlet, and arranged within the holding tank at a distance away from the outlet, see e.g. GB 1 096 778 A.

According to a further aspect a holding tank for holding a liquid over a predefined time period is provided. The holding tank extends along a longitudinal centre axis. The holding tank comprises an inlet for receiving the liquid. Moreover, the holding tank comprises an outlet for allowing liquid to exit the holding tank. The outlet is positioned at a level adjacent to a bottom level of the holding tank, in a wall section of the holding tank, and at a location oppositely arranged to a plane including the longitudinal centre axis, and wherein a shortest distance from the inlet to the plane is equal to a shortest distance between the inlet and the longitudinal centre axis, see e.g. EP 0 556 101 A1.

According to a further aspect a system comprising the holding tank according to some embodiment is provided.

According to the invention, a system for continuously feeding a liquid through a pipe arrangement is provided. The system comprises at least one first holding tank and at least one second holding tank according to any of the above described holding tanks. The system comprises a main inlet switch valve configured to switch between feeding a liquid from a main inlet pipe and onwards to a first inlet pipe connected to the an inlet of the first holding tank, and feeding a liquid from the main inlet pipe and onwards to a second inlet pipe connected to the inlet second holding tank. Furthermore, the system comprises a first outlet valve arranged on a first outlet pipe connected to the outlet of the first holding tank and to a main outlet pipe. Moreover, the system comprises a second outlet valve arranged on a second outlet pipe connected to the outlet of the second holding tank, and connectable to the main outlet pipe, such that by operating the state of the first outlet valve and the second outlet valve a continuous flow of liquid is maintained in the main outlet pipe.

In a further aspect a distribution device for evenly dispersing a liquid received through an inlet of a holding tank configured to hold a liquid over a predefined time period is provided, wherein the distribution device in use is arranged within the holding tank at a distance away from an outlet of the holding tank.

In yet another aspect, a liquid directing element for being arranged adjacent to an inlet of a holding tank configured to hold a liquid over a predefined time period is provided. The liquid directing element is configured to direct liquid received through the inlet and evenly dispersing the liquid within the holding tank.

According to the invention, a computer program product stored on a computer-readable medium is provided. The computer program product comprises software code adapted to control the operation of a main inlet switch valve, a first outlet valve, and a second outlet valve such that a continuous flow of liquid is maintained in a main outlet pipe.

For a system with capacity of 20000 liters/hour the holding tank according to some embodiments of the invention has been experimentally shown to reduce the steam consumption during the stage of Cleaning-in-place (CIP) and Sterilization with 64% in comparison to a system using a commonly known holding cell. Instead of requiring 747 kg of steam as in a system with a commonly known holding cell, a system including the holding tank according to some embodiments requires only 271 kg of steam.

For a system with capacity of 20000 liters/hour the holding tank according to some embodiments of the invention has been experimentally shown to reduce the water consumption during the stage of CIP and Sterilization with 64% in comparison to a system using a commonly known holding cell. Instead of requiring 12000 liters of water as in a system with a commonly known holding cell, a system including the holding tank according to some embodiments requires only 4350 liters.

For a system with capacity of 20000 liters/hour the holding tank according to some embodiments of the invention has been experimentally shown to reduce the concentrated acid and caustic consumption required with 36% in comparison to a system using a commonly known holding cell. For example, instead of requiring 99 liters of concentrated acid and 66 liters of caustic as in a system with a commonly known holding cell, a system including the holding tank according to some embodiments requires only 63 liters of concentrated acid and 43 liters of caustic.

For a system with capacity of 20000 liters/hour the holding tank according to some embodiments of the invention has been experimentally shown to reduce the mix phase with 83% in comparison to a system using a commonly known holding cell. For example, instead of 167 liters of mix phase volume as in a system with a commonly known holding cell, a system including the holding tank according to some embodiments has a mix phase volume of only 27 liters.

Accordingly, the use of a holding tank according to some embodiments drastically reduces environmental impact, while maintaining accuracy, and at a lower cost.

The holding tank according to some embodiments is also advantageously easy to insulate.

The holding tank according to some embodiments is also advantageously may work as a deaerator, which could remove the need for the use of a separate dearator along the production line.

Contrary to current holding cells, the contents of the holding tank according to some embodiments allows for visual inspection.

The holding tank according to some embodiments may easily be connected in parallel and/or series with another holding tank(s), allowing for variable system capacity simply by adding or removing on or several holding tanks.

The holding tank according to some embodiments is configured to allow for a variation of the holding time on the fly, simply by adjusting the level in the holding tank. More particularly, by reducing a filling level of the holding tank the holding time is also reduced. A positive effect of this is that it is easy to adjust the holding time, for instance by using an intermediate storage in order to stop the flow of product into the holding tank. This is a significant difference compared to spiral formed holding cells in which the velocity must be changed in order to achieve a different holding time. Independently of the level in the tank the holding time accuracy may be maintained.

### BRIEF DESCRIPTION OF THE DRAWINGS

These and other aspects, features and advantages of which the invention is capable of will be apparent and elucidated from the following description of embodiments, reference being made to the accompanying drawings, in which
Fig. 1 is a schematic illustration showing a cross section of a holding tank according to an embodiment;
Figs. 2a to 2c, each illustrates theoretical liquid paths shown in a cross section of a holding tank according to an embodiment;
Figs. 3a and 3b each illustrate the location of the outlet in relation to the inlet of the holding tank according to an embodiment;
Fig. 4 is a schematic illustration showing a cross section of a holding tank according to a further embodiment;
Fig. 5 is a schematic illustration showing a distribution device arranged in a holding tank according to an embodiment;
Fig. 6a is a schematic illustration showing a top view of a distribution device according to an embodiment;
Fig. 6b is a schematic illustration showing a top view of a distribution device arranged in a holding tank according to an embodiment;
Fig. 7 is a schematic illustration showing a cross section of a holding tank according to a further embodiment;
Fig. 8 is a schematic illustration showing a system including two holding tanks according to an embodiment;
Fig. 9 is a schematic illustration showing a system including two holding tanks according to an embodiment, wherein the Cleaning-In-Place (CIP) lines are indicated;
Fig. 10 is a schematic illustration showing a water circulation stage for system including two holding tanks according to an embodiment;
Fig. 11 is a schematic illustration of a system including two holding tanks according to an embodiment, during the stage of filling water into one of the holding tanks while continuously supplying the downstream pipe arrangement with water;
Fig. 12 is a schematic illustration of a system including two holding tanks according to an embodiment, during the stage of filling product into one of the holding tanks;
Fig. 13 is a schematic illustration of a system including two holding tanks according to an embodiment, during the stage in which one of the holding tanks is filled with product;
Fig. 14 is a schematic illustration of a system including two holding tanks according to an embodiment, during the production stage in which the downstream and upstream pipe arrangement of the system is continuously fed with product, while keeping the holding tank comprising the product full;
Fig. 15 is a schematic illustration of a system including two holding tanks according to an embodiment, during the first phase of the product depleting stage at the end of the production stage in which the product supply to the product holding tank is cut off, and the product remaining in the holding tank is drained out to the downstream pipe arrangement, while water is introduced pushing remaining product towards the water holding tank for draining using a switch valve arranged upstream the water holding tank;
Fig. 16 is a schematic illustration of a system including two holding tanks according to an embodiment, during the second phase of the product depleting stage at the end of the production stage, in which pure water containing no mix phase is supplied to and filling the water holding tank, while the last product remaining in the holding tank is drained out to the downstream pipe arrangement;
Fig. 17 is a schematic illustration of a system including two holding tanks according to an embodiment, during the third phase of the product depleting stage at the end of the production stage, in which the water holding tank is almost full with pure water containing no mix phase, while the product holding tank is empty, thereby marking the end of the production stage;
Fig. 18 is a schematic illustration of a system including two holding tanks according to an embodiment, during a post production water circulation stage, in which pure water containing no mix phase is continuously fed to the water holding tank, and to the downstream pipe arrangement; and
Fig. 19 is a schematic illustration of a system including two holding tanks according to an embodiment, wherein the two holding tanks may be connected in series.

### DESCRIPTION OF EMBODIMENTS

The following description focuses on embodiments applicable to a holding tank for holding a liquid over a predefined time period and a system associated therewith.

An idea of the present invention is to provide a holding tank allowing for an accurate holding time, meaning that the holding tank is configured in such a way that it may be determined with reasonable accuracy that the liquid entering the holding tank, will not exit the holding tank until the holding time, e.g. five minutes, has passed. An idea is that the level of accuracy should be in the same range as currently used holding cells. Accordingly, the holding tank may replace the need for using commonly known holding cells, by performing the same functionalities in a much more efficient and convenient manner.

Currently, several types of tanks are used in food processing systems. For example, in dairy processing system storage tanks, such as silo tanks, are used for the collection and reception of milk. Intermediate storage tanks are used to store a product for a short time before it continues along the line. The intermediate storage tanks work as buffer storage facilities, leveling out variations in the flow. Another functionality of the intermediate storage tanks is to supply milk to the processing system in the event of a temporary processing stoppage. Mixing tanks are used for mixing different products by means of agitators. Moreover, process tanks, such as balance tanks, are used to keep the product along the line at a constant level.

A general difference with a holding tank according to the embodiments disclosed herein and commonly known tanks, such as storage tanks, intermediate storage tanks, mixing tanks, and process tanks is that it is configured to assure that the liquid leaving the holding tank at least has been in the holding tank for a certain time period, also referred to as the holding time. As such, the holding tank is configured to promote laminar flow therein to as far as possible assure holding each unit of milk at least during the specified holding time before the unit of milk exits the holding tank.

It should be noted that the effect of holding each unit of milk at least during the holding time may be realized while the holding tank is continuously receiving units of milk through an inlet thereof, and units of milk continuously exits the outlet thereof.

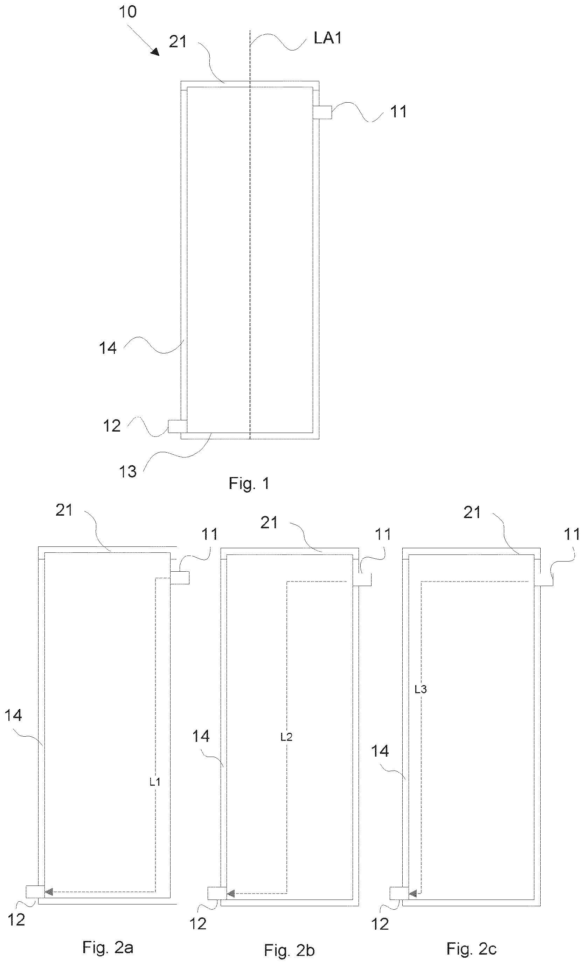

In an embodiment, according to Fig. 1, a holding tank 10 is provided. Fig. 1 illustrates a cross section of the holding tank 10. The holding tank 10 comprises an inlet 11 for receiving a liquid. The holding tank 10 further comprises an outlet 12 through which the liquid may exit the holding tank 10. The holding tank 10 extends along a longitudinal centre axis (LA1). The outlet 12 is positioned in a wall section 14 of the holding tank close to the bottom level 13 of the holding tank. The inlet 11 is provided in another wall section 14 of the holding tank. As may be observed from Fig. 1, the inlet and outlet is oppositely arranged in relation to the longitudinal centre axis LA1.

By arranging the outlet 12 opposite the inlet 11 in relation to the longitudinal centre axis LA1 and as close to the bottom as possible this means that it is theoretically likely that any milk unit entering the tank through the inlet 11 will travel the same distance in the holding tank before it exits the tank through the outlet 12, provided that each milk unit is considered to move in a linear fashion. This is illustrated in Figs. 2a to 2c, in which three different milk unit paths L1, L2, and L3 are shown. As may be observed from Figs. 2a to 2c, each of the milk unit paths has an identical length.

It should be appreciated that even if each milk unit does not necessarily move in a linear fashion in the real world, experiments have shown an improvement in holding accuracy when positioning the inlet and the outlet on the opposite sides in relation to the longitudinal centre axis LA1.

Although it is preferred that the outlet is precisely oppositely provided in the holding tank 10 in relation to the inlet 11, i.e. at a radial angular distance of 180 degrees from the inlet 11, the present inventors have noticed improvements in holding accuracy when the outlet is provided at a radial angular distance, which may also be referred to as azimuth, of at least ±90 degrees from the inlet.

In other words, the outlet 12 could be provided on the other side of a plane incorporating the longitudinal centre axis LA1, and wherein a shortest distance from the inlet 11 to the plane PL1 is equal to a shortest distance between the inlet 11, 11a, 11b and the longitudinal centre axis. Hence, the imaginary plane divides the holding tank in two halves. Furthermore, the radial angular distance from the inlet 11 to the imaginary plane along the holding tank is ±90degrees.

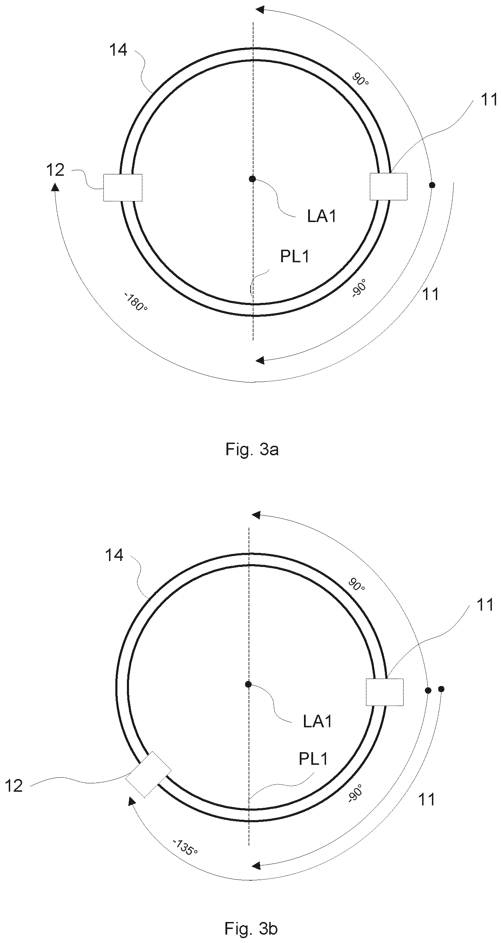

Fig. 3a shows a top view of cylindrical holding tank according to an embodiment in cross section. As may be observed in Fig. 3a, the radial angular distance along the holding tank between the inlet and the imaginary plane PL1 is 90 degrees and -90 degrees, respectively. It may also be observed that the outlet 12 is located at a radial angular distance of ±180 degrees from the inlet 11.

Fig 3b shows another holding tank according to an embodiment in cross section. Here, the outlet 12 is provided at a radial angular distance of - 135 degrees or 225 degrees from the inlet 11.

As mentioned above, the closer the outlet 12 is provided to ±180 degrees of radial angular distance in relation to the inlet 11, the more reliable holding time accuracy.

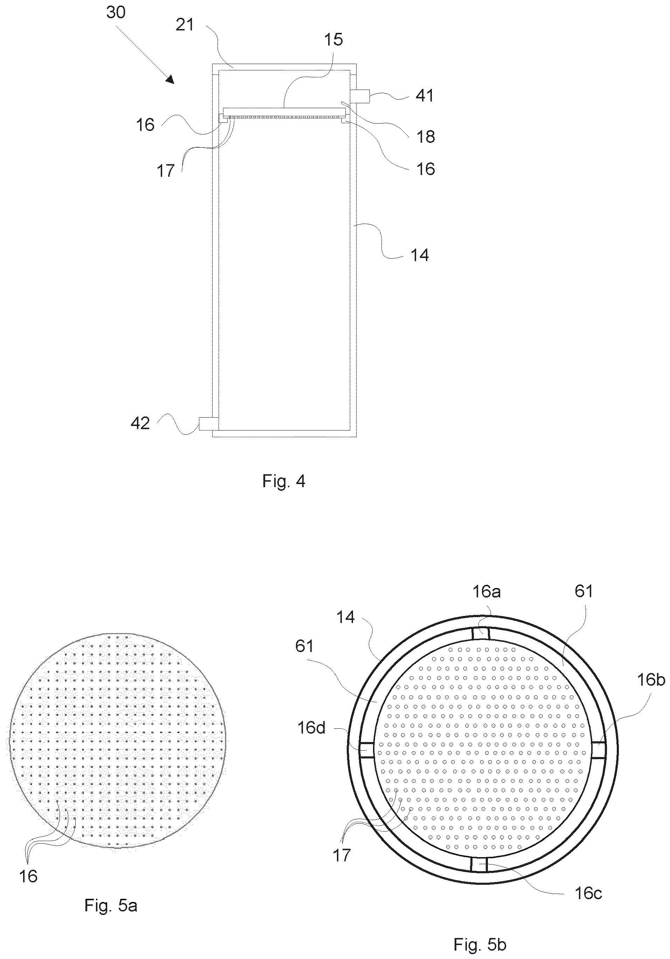

Fig. 4 schematically illustrates a holding tank 30 according to an embodiment seen in cross section. The holding tank 30 comprises an inlet 41 for receiving liquid into the holding tank and an outlet 42 for allowing liquid to exit the holding tank. The outlet 42 is provided in wall section 14 of the holding tank close to a bottom level of the holding tank. The holding tank 30 further comprises a distribution device 15 for evenly dispersing the liquid received through the inlet 41. As may be observed from Fig. 4, the distribution device 15 is arranged within the holding tank 30 at a distance away from the outlet 42.

The distribution device acts as to direct the liquid received through the inlet 41 towards the outlet in as linear or laminar manner as possible. Although the holding tank 30 is not necessarily limited to a precise location of the outlet in relation to the inlet as described in the embodiments in view of Figs. 1 to 3a, the distribution device acts as to allow for an equal distance travelled for each milk unit between the inlet and the outlet of the tank, similarly to the concept of Figs. 2a to 2c.

Depending on the dimension of the inlet 11 and the liquid flow in the processing system, the liquid entering the holding tank arrives with a certain velocity. The distribution plate is arranged such as to evenly spread or direct the incoming liquid having a cross section area of the inlet to a cross section area essentially corresponding to the interior cross section of the holding tank. In most cases the cross sectional area of the inlet 41 is small compared to the interior cross sectional area of the holding tank. As the liquid flow rate is constant, increasing the cross sectional area will reduce the speed of the liquid. The reduced speed allows for an improved laminar flow in the holding tank by means of the distribution device.

The distribution device 15 may be configured as a sheet or plate of material.

The configuration and range of dimension of the inlet 41 as well as the intended flow rate of the processing system to which the holding tank is to be connected in use, are relevant when designing the distribution device. For example, it is possible utilize two differently designed distribution devices within the same holding tank, depending on the flow rate of the system. If the dimensions of the inlet are known, the configuration of the distribution device thus depends mainly on the flow rate of the processing system.

The holding tank 30 may be configured with a seat assembly 16 provided on the interior thereof, for receiving the distribution device 15 in use.

In an embodiment the distribution device 15 comprises a plurality of perforations 17. The perforations act as a sieve, thereby allowing the received liquid on top of the distribution device to evenly drop down towards the bottom of the holding tank in a laminar fashion.

The dimension and number of the perforations is determined based on the volume flow rate of liquid entering the holding tank.

For example, for a holding tank receiving 5000liters per hour, the number of perforations may be in the order of 350 to 500 perforations, having a diameter in the range of 3 to 5 mm.

As may be observed from Fig. 5a the distribution device 15 has a circular cross section, and is thus suitable for use in a cylindrical holding tank having a circular cross section.

Fig. 5b shows a top view of the interior of a cylindrical holding tank provided with a seat assembly 16. In this example the seat assembly 16 comprises four seat portions 16a, 16b, 16c, 16d protruding from the inner side of the wall 14 of the holding tank towards the interior of the holding tank at four respective locations. A distribution device 15 is placed on top the seat assembly. As may be observed from Fig. 5b, there is formed a cavity 61 between the inner side of the wall 14, each of the seat portions, and the outer boundary of the distribution device 15, through which excess liquid may flow towards the bottom of the holding tank. The cavity 61 may act as a safety function in the event that too much liquid is introduced into the holding tank for the distribution plate to handle sufficiently.

In an embodiment, the distribution device 15 comprises a protruding edge 151 along the circumference thereof for holding, at least temporarily, a volume of liquid within the distribution device 15. The protruding edge improves the laminar flow in the holding tank 30, as the volume occupied in the distribution device allows for evenly dispersing liquid from the volume of liquid towards the bottom of the holding tank.

In an embodiment, the perforations may be dimensioned and positioned such that a certain volume or level of liquid is required in the distribution device before liquid drops are able to move through the perforations. This also allows for improving the laminar flow in the holding tank.

Further, due to the differences between products, the number of perforations as well as the size and form of the perforations may be adapted to a specific product. For instance, different products can have different surface tension properties, which can be taken into account when designing a distribution device for a specific product.

The liquid moving through the perforations results in a pressure drop as its velocity increases.

In an embodiment, the holding tank 30 further comprises a liquid directing element 18 arranged adjacent to the inlet 11 for directing the liquid exiting the inlet 11 for reception of the distribution device 15.

While the number and dimension of the perforations of the distribution device is mainly dependent on the flow rate of the processing line, the liquid directing element may advantageously be arranged to take into account the velocity at which the liquid entering the holding tank has to efficiently directing it to the distribution device.

In an embodiment, the liquid directing element forms part of the distribution device.

The holding tank according to some embodiments is provided with an inspection panel 21, such as a cap, in its top section to facilitate ocular inspection.

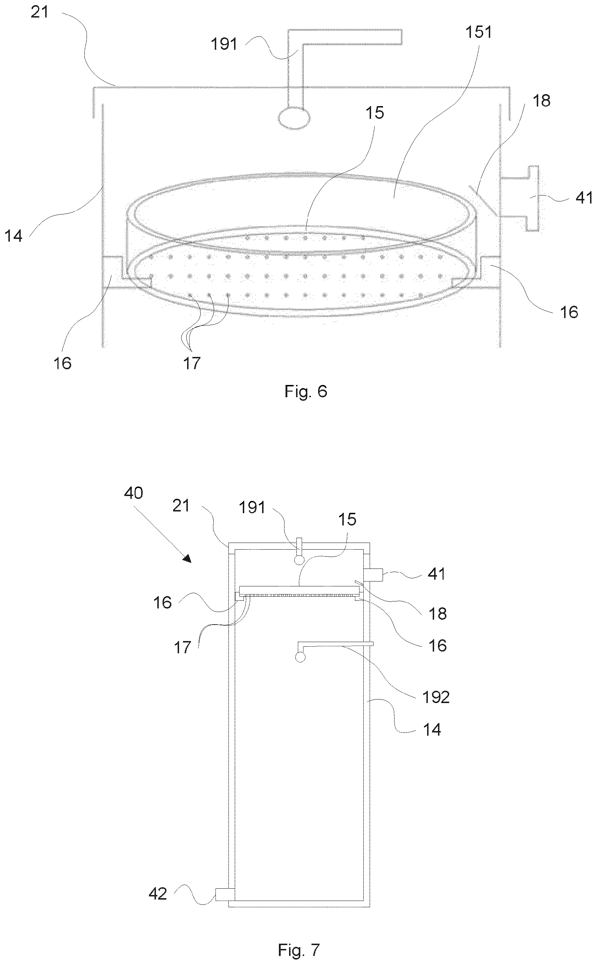

Fig. 6 shows the distribution device 15 according to an embodiment. The protruding edge 151 may be observed extending from distribution sheet towards the top of the holding tank.

Fig. 7 illustrates a holding tank 40 according to a further embodiment. In addition to the holding tank described in view of Fig. 4, the holding tank 40 further comprises a first washing unit 191 connected in the top section of the holding tank, allowing for washing the holding tank and the distribution device when desired. The first washing unit 191 may comprise a nozzle for spray cleaning the equipment in the holding tank. The holding tank 40 may also be provided with a second washing unit 192 provided at a level below that intended for the distribution device, i.e. closer to the outlet 42 than the distribution device, in use. The second washing unit 192 may also be provided with a nozzle for spraying the interior of the holding tank when desired. The first and/or second washing unit(s) is operated during a washing stage in which water is introduced in the holding tank for removing any product residues before a cleaning stage is initiated. The product comprised in the water/product mix, also referred to as the mix phase, being the result of washing the holding tank with the first and second washing units, and may be recycled in certain recycling units along the processing line.

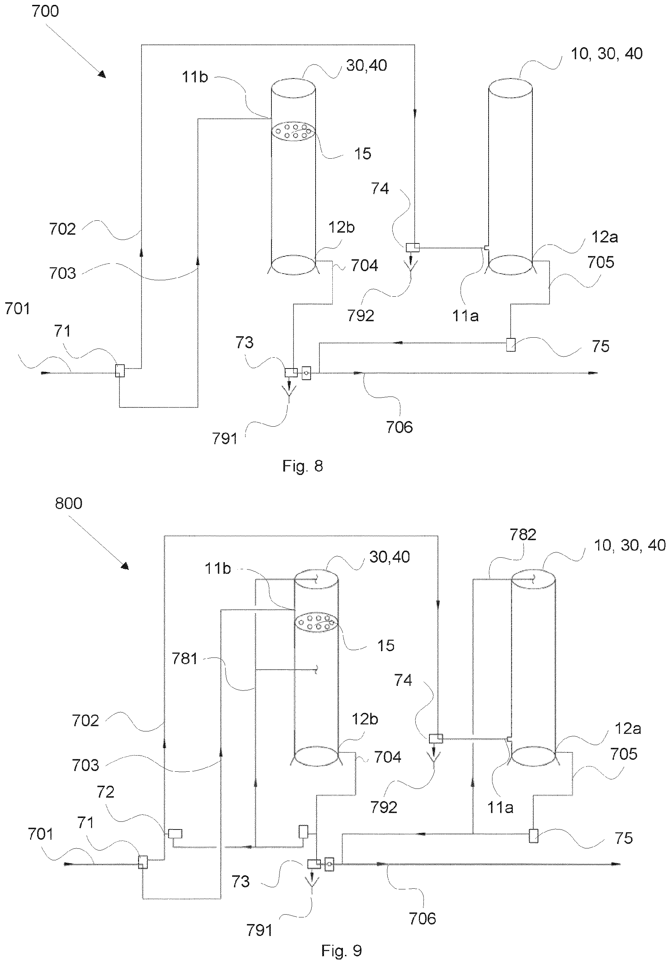

In an embodiment, according to Fig. 8, a system for continuously feeding a liquid through a pipe arrangement is provided. The system comprises a two holding tanks 10, 30, 40, at least one of which being provided with a distribution device 15. The at least one holding tank provided with the distribution device is configured to primarily accommodate product, while the at least one other holding tank is suitable to accommodate water holding a temperature between 90 to 95°C. The at least one holding tank 30, 40 suitable for product comprises an inlet 11b and an outlet 12b, and may for simplicity be referred to as a product holding tank. The at least one holding tank 10, 30, 40 suitable for holding water has an inlet denoted 11a and an outlet denoted 12a, and may for simplicity be referred to as a water holding tank. The system comprises a main inlet switch valve 71 configured as a switch for switching between a first and second state. In the first switch state liquid is fed from a main inlet pipe 701 and onwards to a first inlet pipe 702 connected to the inlet 11a of the water holding tank 10, 30, 40. In the second switch state the liquid is fed from the main inlet pipe 701 and onwards to a second inlet pipe 703 connected to the inlet 11b of the product holding tank. A first outlet valve 75 is arranged on a first outlet pipe 705 connected to the outlet 12a water holding tank 10, 30, 40 and to a main outlet pipe 706. A second outlet valve 73 is arranged on a second outlet pipe 704 connected to the outlet 12b of the product holding tank 30, 40, and is connectable to the main outlet pipe 706. By operation of the state of the first outlet valve 75 and the second outlet valve 73 a continuous flow of liquid, i.e. pure product, product/water mix, or pure water is maintained in the main outlet pipe 706.

As an alternative, instead of having a distribution device, the holding tank may have the inlet and the outlet placed opposite to each other, or as explained above, at least 90 degrees spaced apart in case the holding tank has a circular cross section. Furthermore, as also explained above, an option is to combine the feature of having the inlet and the outlet placed spaced apart from each other with the feature of having the distribution device.

Moreover, an advantage of having a cylindrical holding tank is that less material is needed compared to for instance a cubical holding tank. It is also easy to clean a cylindrical holding tank since corners are avoided.

In an embodiment, the system is further provided with a control unit, configured to operate the state of the first outlet vale 75 and the second outlet valve 73. A control signal triggers the change of state of the first outlet valve 75 and the second outlet valve 73. For example, when the first outlet valve 75 is closed to the main outlet pipe 706 and the second outlet valve 73 is opened to the main outlet pipe 706, upon receipt of the control signal the control unit is configured to opening the first outlet valve 75 a first time period before closing the second outlet valve 73. On the other hand, when the first outlet valve 75 is opened to the main outlet pipe 706 and the second outlet valve 73 is closed to the main outlet pipe 706, upon receipt of the control signal the control unit is configured to opening the second outlet valve 73 a second preset time period before closing the first outlet valve 75.

In an embodiment the control signal may be transmitted by a level sensor provided in the product holding tank. For example, when a low product level is detected this may trigger the opening of the first outlet valve 75 followed by closing the second outlet valve 73, thereby ensuring a continuous flow of liquid in the downstream pipe arrangement, such as the main outlet pipe 706.

As the holding time of the holding tank is influenced by the level of liquid in the holding tank, a level sensor may accordingly indicate the current holding time of the holding tank.

Between the water holding tank and the main inlet switch valve 71, on the first inlet pipe 702, there may be provided a switch valve 74 for switchably connecting the liquid travelling in the main inlet pipe 701 either to a drain 792 or the inlet 11a of the water holding tank 10, 30, 40. The drain 792 may be connected to a recycling unit for recycling product from a product/water mix phase travelling in the first inlet pipe 702. The pipe portion between the switch valve 74 and the inlet 11a of the water holding tank, is configured to accommodate only pure water, i.e. no mix phase. A sensor (not shown) may send a control signal being dependent of the type of liquid travelling through the first inlet pipe 702, such that upon receipt of the control signal a control unit may control the state of the switch 74 to either forward the liquid to the drain 792 or the water holding tank 10,30,40.

Fig. 9 schematically illustrates a system which in addition to the system described in view of Fig. 8, also shows washing or Cleaning-in-Place lines 781, 782 and an associated washing valve 72. As may be observed from Fig. 9, water enters the product holding tank 30,40 via the second inlet pipe 703, washing the inlet, and then exits in the second outlet 12b. The water then continues into washing line 781 where it enters the first and second washings units 191,192 (not shown in Fig. 9), spraying the interior of the holding tank, including the distribution device 15.

Figs. 10 to 18 show different stages or modes of operating the system according to some embodiments.

Fig. 10 is a schematic illustration showing a water circulation stage for system including two holding tanks according to an embodiment. Here, the main inlet valve 71 is switched such that water flowing in the main inlet pipe 701 is transferred to the first inlet pipe 702. The switch valve 74 is switched to forward the water to the water holding tank 10, 30, 40. The first outlet valve 75 is open and the second outlet valve 73 is closed for communication to liquid in the main outlet pipe 706. Hence, the flow path of the water is shown in Fig. 10 with a bolded line.

Fig. 11 is a schematic illustration of a system including two holding tanks according to an embodiment, during the stage of filling water into one of the water holding tank while continuously supplying the downstream pipe arrangement 706with water. The first outlet valve 75 is open and the second outlet valve 73 is closed for communication to liquid in the main outlet pipe 706.

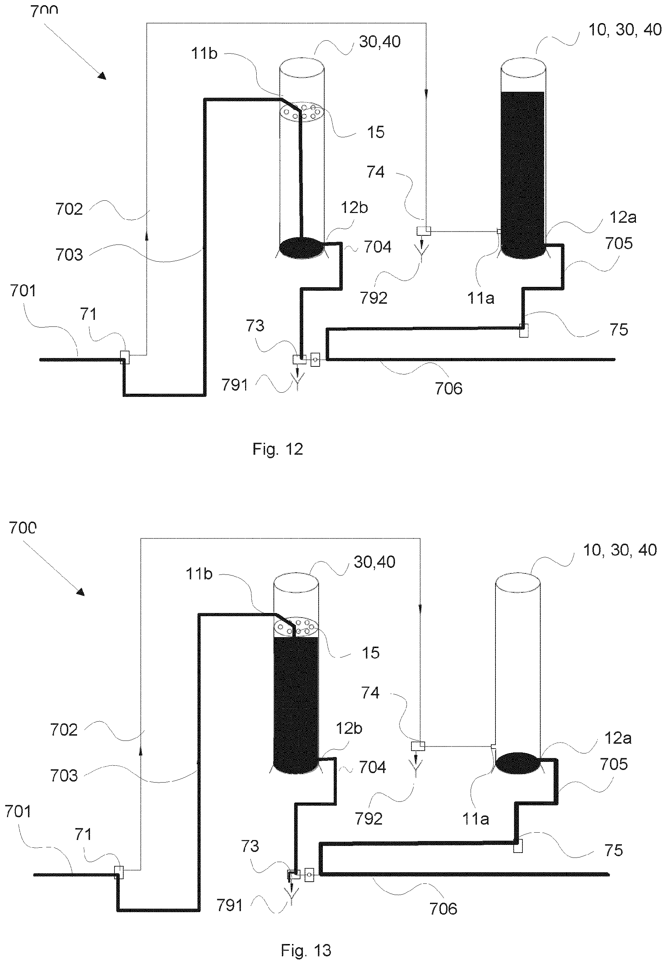

Fig. 12 is a schematic illustration of a system including two holding tanks according to an embodiment, during the stage of filling product into one of the holding tanks. As may be observed from Fig. 12, the product is filled into the product holding tank 30,40 while the water holding tank is drained. The first outlet valve 75 is open and the second outlet valve 73 is closed for communication to liquid in the main outlet pipe 706.

Taking into account the common requirement of five minutes denaturation, consequently the filling time for each of the holding tanks according to some embodiments is set to five minutes.

Fig. 13 is a schematic illustration of a system including two holding tanks according to an embodiment, during the stage in which the product tank is filled with product, and consequently the water holding tank is emptied. In this situation, the second outlet valve 73 is opened before the first outlet valve 75 is closed. Hence, the liquid flowing in the main outlet pipe 706 will go from water to product/water mix phase to pure product. The first outlet valve 75 is open and the second outlet valve 73 is closed for communication to liquid in the main outlet pipe 706.

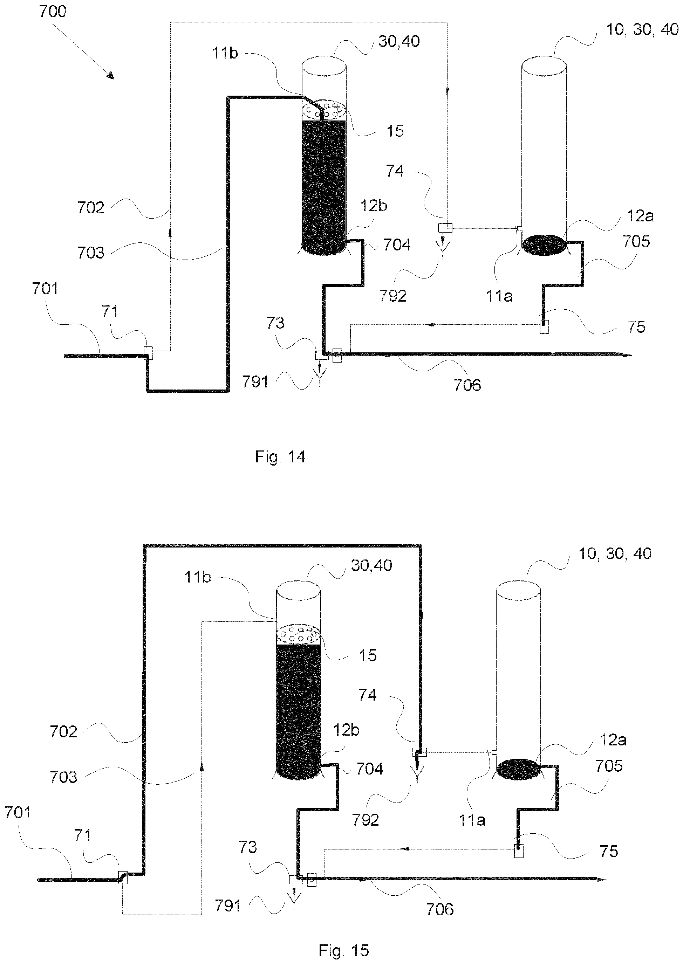

Fig. 14 is a schematic illustration of a system including two holding tanks according to an embodiment, during the production stage in which the downstream 706 and upstream pipe arrangement 701 of the system is continuously fed with product, while keeping the holding tank comprising the product full. In this stage each unit of product entering the holding tank, will remain therein, for at least five minutes before exiting the product holding tank through the second outlet 12b. The first outlet valve 75 is closed and the second outlet valve 73 is open for communication to liquid in the main outlet pipe 706.

Fig. 15 is a schematic illustration of a system including two holding tanks according to an embodiment, during the first phase of the product depleting stage at the end of the production stage in which the product supply to the product holding tank is cut off. The product remaining in the product holding tank is drained out to the downstream pipe arrangement 704, 706, while water is introduced pushing remaining product from the main inlet pipe 701 towards the water holding tank for draining at the drain 792. Accordingly, the switch valve 74 is switched as not to allow any liquid to pass on into the water holding tank at this point. The first outlet valve 75 is closed and the second outlet valve 73 is open for communication to liquid in the main outlet pipe 706.

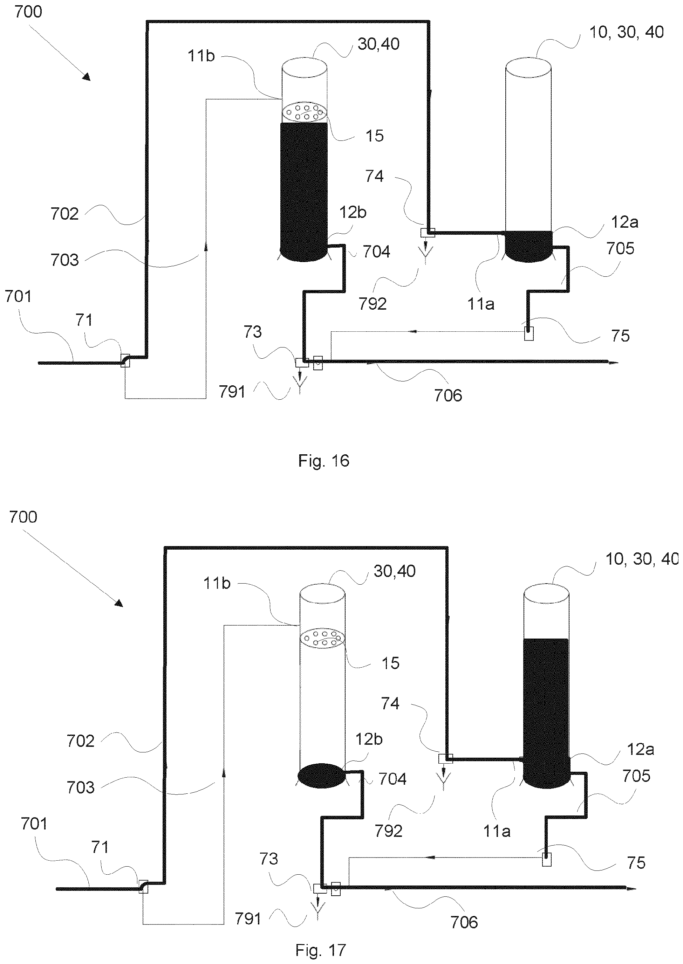

Fig. 16 is a schematic illustration of a system including two holding tanks according to an embodiment, during the second phase of the product depleting stage at the end of the production stage, in which pure water containing no mix phase is supplied to and filling the water holding tank, while the last product remaining in the holding tank is drained out to the downstream pipe arrangement. Hence, in this stage all of the product water mix phase has been drained out the drain 792, and now the switch valve 74 is operated for communication between the water holding tank and the first inlet pipe 702. The first outlet valve 75 is closed and the second outlet valve 73 is open for communication to liquid in the main outlet pipe 706.

Fig. 17 is a schematic illustration of a system including two holding tanks according to an embodiment, during the third phase of the product depleting stage at the end of the production stage. In this situation the water holding tank is almost full with pure water containing no mix phase, while the product holding tank is now empty, thereby marking the end of the production stage. The first outlet valve 75 is still closed and the second outlet valve 73 is still open for communication to liquid in the main outlet pipe 706. However, subsequent to this stage the first outlet valve will be opened a predetermined time period before closing the second outlet valve 73.

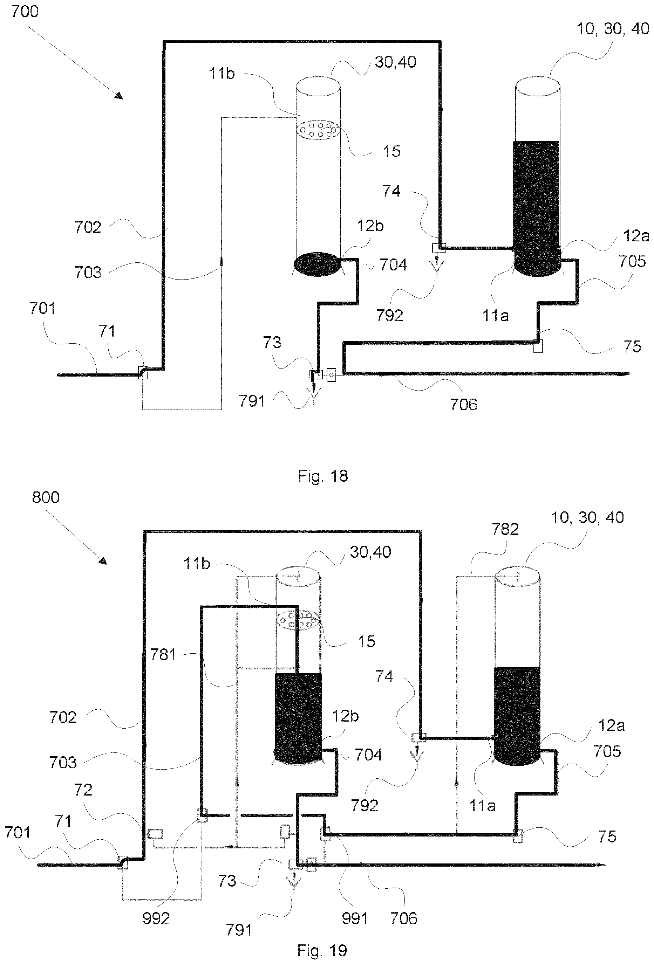

Fig. 18 is a schematic illustration of a system including two holding tanks according to an embodiment, during a post production water circulation stage, in which pure water containing no mix phase is continuously fed to the water holding tank, and to the downstream pipe arrangement. The first outlet valve 75 is now opened and the second outlet valve 73 is closed for communication to liquid in the main outlet pipe 706.

In an embodiment, the second outlet valve 73 is a switch valve being switchably connected to the main outlet pipe 706 and a drain 791, respectively. The drain may be further connected to a recycling unit for recycling product from a product/water mix phase received by the drain.

In an embodiment, a distribution device 15 for evenly dispersing a liquid, received through an inlet 11, 11a, 11b of a holding tank configured to hold a liquid over a predefined time period, is provided.. The distribution device is in use arranged within the holding tank 30, 40 at a distance away from an outlet 12, 12a, 12b of the holding tank.

In accordance with an embodiment, the received liquid is evenly dispersed through a plurality of perforations 17 arranged in the distribution device 15.

In an embodiment, the distribution device 15 further comprises a protruding edge 151 along the circumference thereof for holding, at least temporarily, a volume of liquid within the distribution device 15.

In an embodiment, a liquid directing element 18 for being arranged adjacent to an inlet 11 of a holding tank 10, 30, 40 configured to hold a liquid over a predefined time period is provided. The liquid directing element is suitable for directing liquid received through the inlet 11 and evenly dispersing the liquid within the holding tank.

A common flow rate used in a medium sized dairy processing system is about 20000liters/hour. Considering a holding tank having a capacity of 5000liters/h, an additional 15000liters/h of holding is required. In this event, it is possible to simply add three further holding tanks for holding product, connected in parallel during the production stage, and switched to a serially connected state during the washing and/or cleaning stage(s).

The desired capacity of the system, may determine the suitable dimensions of the holding tank. For example, a holding tank with a capacity of 5000 liters/hour having an inner diameter of 600 mm, may have a distribution device being 580mm in diameter, with a protruding edge of 100 mm. Such a distribution device may be provided with about 450, such as 453, perforations being 4 mm in diameter. From this example it may be concluded that there will be an approximate 1 cm gap (see 61 in Fig. 5b) between the outer boundary of the distribution device and the inner wall 14 of the holding tank, along the extension of the distribution device.

However, it should be appreciated that other dimensions, capacities, and/or number of perforations are equally possible within the scope of the present invention.

The holding tank according to some embodiments may be provided in a cylindrical shape. However, other shapes could also be possible, while still allowing for the technical effects of the present invention.

The distribution device uses the level that is created by the restriction to evenly distribute the fluid in the tank with minimal disturbance of the fluid in the tank when the fluid hits the surface. Hence, the distribution device according to some embodiments does not force the fluid in a certain direction, thereby decreasing the level of disturbance in the holding tank, and improving laminar flow.

In an embodiment, the hot water accommodated in the water holding tank after production may be used for washing the product holding tank and for example a pasteuriser. By using a holding tank instead of a commonly known holding cell, it has been experimentally shown that the volume during CIP and sterilization may be decreased by more than 90%. Accordingly, this means that CIP time will drop dramatically.

Fig. 19 schematically illustrates a system according to an embodiment, which in addition to the system of Fig. 9, comprises a first serial connector switch valve 991, and a second serial connecter switch valve 992. When switched to their respective serial states, water exiting the water holding tank via the first outlet pipe 705 may using the first and second serial connector switch valves be connected to the second inlet pipe 703. Hence, hot water from the water holding tank may be directly used to wash the product holding tank. In addition the washing lines 781 and 782 may be used for spraying the two holding tanks.

It should be noted that the volume of water in a commonly known holding cell constitutes about 2/3 of the total volume in the entire processing line. Since the system according to the embodiments disclosed herein allows for an exact switch between product and water, the volume of mix phase in the system is drastically reduced. Hence, instead of having to push product by means of water from the start of the holding cell to the end of the processing line as in commonly known solutions, in the system according to some embodiments the product is mainly pushed by water after the holding tank.

In an embodiment (not shown), the distribution device is fitted directly onto the inlet of the holding tank. In this way the distribution device in general acts in the same way as a known shower nozzle as may be found in almost every bathroom.

Hence, the distribution plate may be configured as a closed housing connected to the inlet of the holding tank, and with perforations allowing liquid to exit the housing towards the bottom of the holding tank. However, it is not required that the distribution device when fitted directly onto the inlet of the holding tank, has a closed housing. In fact, it is also possible for the distribution device to be configured as a trough or similar, with an open section preferably facing towards the top of the holding tank. Other solutions are equally possible.

When the distribution device is directly fitted onto the inlet of the holding tank, it is also important to arrange the first and second washing units such as to allow for a sufficient washing of the holding tank and the distribution device. For example, the second washing unit may further be provided with a nozzle facing towards the lower side of the area in which the distribution device are fitted directly onto the inlet of the holding tank.

It may be preferred in some situations to have the same number of water holding tanks as number of product holding tanks in the system. This allows for an efficient operation of the system thereby allowing the product holding tank(s) to be filled while the water tank(s) are drained and vice versa.

In an embodiment a system for continuously feeding a liquid through a pipe arrangement is provided. The system comprises at least a first holding tank, and at least a second holding tank. The first and second holding tank is switchably connected to each other in a first parallel connected state and second serially connected state.An advantage of this is that during production the two tanks may be in parallel in order to reduce the mix phase, as explained above, and during cleaning the two tanks may be connected in series, providing for more efficient cleaning.

In an embodiment, a computer program product stored on a computer-readable medium is provided. The computer program product comprises software code adapted to control the operation of the main inlet switch valve 71, the first outlet valve 75, and the second outlet valve 73 such that a continuous flow of liquid is maintained in the main outlet pipe 706.

The computer program product may in some embodiments be configured to be run by the control unit, for controlling any one of or each of the valves or pumps (not shown) associated with the system according to some embodiments. The computer program product may also comprise software code adapted to control the valves in view of control signals sent from any level sensors.

Although the embodiments above have been drafted as separate embodiments, a combination between any one of the embodiments mentioned herein, is equally possible. However, the scope of the present invention is defined by the appended claims.

Although some embodiments have been described in association with food processing system and in particular dairy processing systems, it should be appreciated that the holding tank, the associated systems, distribution device, and liquid directing element may be used in any setting requiring holding of a liquid unit for a predetermined time.

## Claims

1. A system (700) for continuously feeding a liquid through a pipe arrangement, the system comprising
at least one first holding tank (10,30,40),
at least one second holding tank (30, 40) for holding a liquid over a predefined time period, said holding tank (30, 40), comprising:
an inlet (11, 11a, 11b) for receiving the liquid,
an outlet (12, 12a, 12b) for allowing liquid to exit the holding tank (30, 40), and
a distribution device (15) for evenly dispersing the liquid received through the inlet (11, 11a, 11b), and arranged within the holding tank (30, 40) at a distance away from the outlet (12, 12a, 12b),
said system further comprising a main inlet switch valve (71) configured to switch between
feeding a liquid from a main inlet pipe (701) and onwards to a first inlet pipe (702) connected to the an inlet (11a) of the first holding tank (10, 30, 40), and
feeding a liquid from the main inlet pipe (701) and onwards to a second inlet pipe (703) connected to the inlet (11b) of the second holding tank,
a first outlet valve (75) arranged on a first outlet pipe (705) connected to the outlet (12a) of the first holding tank (10, 30, 40) and to a main outlet pipe (706),
a second outlet valve (73) arranged on a second outlet pipe (704) connected to the outlet (12b) of the second holding tank (30, 40), and connectable to the main outlet pipe (706),
such that by operating the state of the first outlet valve (75) and the second outlet valve (73) a continuous flow of liquid is maintained in the main outlet pipe (706)..

2. A system (700) for continuously feeding a liquid through a pipe arrangement, the system comprising
at least one first holding tank (10,30,40),
at least one second holding tank (10, 30, 40) for holding a liquid over a predefined time period, said holding tank (10, 30, 40) extending along a longitudinal centre axis (LA1), comprising:
an inlet (11, 11a, 11b) for receiving the liquid,
an outlet (12, 12a, 12b) for allowing liquid to exit the holding tank (10, 30, 40),
wherein the outlet (12, 12a, 12b) is positioned at a level adjacent to a bottom level (13) of the holding tank (10, 30, 40), in a wall section (14) of the holding tank, and at a location oppositely arranged to a plane including the longitudinal centre axis, and wherein a shortest distance from the inlet (11, 11a, 11b) to the plane is equal to a shortest distance between the inlet (11, 11a, 11b) and the longitudinal centre axis,
said system further comprising a main inlet switch valve (71) configured to switch between
feeding a liquid from a main inlet pipe (701) and onwards to a first inlet pipe (702) connected to the an inlet (11a) of the first holding tank (10, 30, 40), and
feeding a liquid from the main inlet pipe (701) and onwards to a second inlet pipe (703) connected to the inlet (11b) of the second holding tank,
a first outlet valve (75) arranged on a first outlet pipe (705) connected to the outlet (12a) of the first holding tank (10, 30, 40) and to a main outlet pipe (706),
a second outlet valve (73) arranged on a second outlet pipe (704) connected to the outlet (12b) of the second holding tank (30, 40), and connectable to the main outlet pipe (706),
such that by operating the state of the first outlet valve (75) and the second outlet valve (73) a continuous flow of liquid is maintained in the main outlet pipe (706).

3. The system (700) according to claim 2, said second holding tank further comprising a distribution device (15) for evenly dispersing the liquid received through the inlet (11, 11a, 11b), and arranged within the holding tank (30, 40) at a distance away from the outlet (12, 12a, 12b).

4. The system (700) according to claim 1 or 3, wherein the distribution device (15) comprises a plurality of perforations (17).

5. The system (700) according to claim 4, wherein the distribution device (15) comprises a protruding edge (151) along the circumference thereof for holding, at least temporarily, a volume of liquid within the distribution device (15).

6. The system (700) according to any one of the previous claims, said second holding tank further comprising at least one seat assembly (16) arranged on an interior wall (14) section of the holding tank for receiving the distribution device (15).

7. The system (700) according to any one of the claims 5 to 6, said second holding tank further comprising a liquid directing element (18) arranged adjacent to the inlet (11) for directing the liquid exiting the inlet (11) to the distribution device (15).

8. The system (700) according to any one of the previous claims, said second holding tank further comprising an inspection panel (21).

9. The system (700) according to claim 4, wherein the size of the perforations is determined based on the volume flow rate of liquid entering the holding tank.

10. The system (700) according to any one of the claims 4 to 9, wherein the plurality of perforations have a size in the range of 3 to 5 mm, such as 4 mm.

11. The system (700) according to any one of claims 4 to 10, wherein the number of the plurality of perforations is 350 to 500 perforations for a holding tank receiving 5000 liters of liquid per hour

12. The system according to claim 1 or 2, further comprising a control unit, configured to operate the state of the first outlet valve (75) and the second outlet valve (73) to allow for a continuous flow of liquid in the main outlet pipe,
wherein a change of state of the first outlet valve (75) or the second outlet valve (73) is triggered by a control signal, and
wherein the control unit is configured such that
when the first outlet valve (75) is closed to the main outlet pipe (706) and the second outlet valve (73) is opened to the main outlet pipe (706), upon receipt of the control signal, the control unit is configured to opening the first outlet valve (75) a first time period before closing the second outlet valve (73), and
when the first outlet valve (75) is opened to the main outlet pipe (706) and the second outlet valve (73) is closed to the main outlet pipe (706), upon receipt of the control signal, the control unit is configured to opening the second outlet valve (73) a second preset time period before closing the first outlet valve (75).

13. The system according to claim 1, 2 or 12, wherein the second outlet valve is a switch valve being switchably connected to the main outlet pipe (706) and a drain (791), respectively.

14. A computer program product stored on a computer-readable medium, comprising software code adapted to control the operation of the main inlet switch valve (71), the first outlet valve (75), and the second outlet valve (73) of claim 1, 2, 12 or 13 such that a continuous flow of liquid is maintained in the main outlet pipe (706).

## Patentansprüche

1. System (700) zum kontinuierlichen Fördern einer Flüssigkeit durch eine Rohranordnung, wobei das System Folgendes umfasst:
wenigstens einen ersten Vorratstank (10, 30, 40),
wenigstens einen zweiten Vorratstank (30, 40) zum Bevorraten einer Flüssigkeit über einen vorgegebenen Zeitraum, wobei der Vorratstank (30, 40) Folgendes umfasst:
einen Einlass (11, 11a, 11b) zum Aufnehmen der Flüssigkeit,
einen Auslass (12, 12a, 12b) zum Ermöglichen, dass Flüssigkeit aus dem Vorratstank (30, 40) austritt, und
eine Verteilvorrichtung (15) zum gleichmäßigen Abgeben der durch den Einlass (11, 11a, 11b) aufgenommenen Flüssigkeit, die in dem Vorratstank (30, 40) in einem Abstand von dem Auslass (12, 12a, 12b) angeordnet ist,
wobei das System ferner ein Haupteinlassumschaltventil (71) umfasst, das dazu ausgelegt ist, zwischen
dem Fördern einer Flüssigkeit aus einem Haupteinlassrohr (701) und weiter zu einem ersten Einlassrohr (702), das mit einem Einlass (11a) des ersten Vorratstanks (10, 30, 40) verbunden ist, und
dem Fördern einer Flüssigkeit aus dem Haupteinlassrohr (701) und weiter zu einem zweiten Einlassrohr (703), das mit dem Einlass (11b) des zweiten Vorratstanks verbunden ist, umzuschalten,
ein erstes Auslassventil (75), das an einem ersten Auslassrohr (705) angeordnet ist, das mit dem Auslass (12a) des ersten Vorratstanks (10, 30, 40) und mit einem Hauptauslassrohr (706) verbunden ist,
ein zweites Auslassventil (73), das an einem zweiten Auslassrohr (704) angeordnet ist, das mit dem Auslass (12b) des zweiten Vorratstanks (30, 40) verbunden ist und mit dem Hauptauslassrohr (706) verbindbar ist,
und zwar auf eine solche Weise, dass durch Steuern des Zustands des ersten Auslassventils (75) und des zweiten Auslassventils (73) ein kontinuierlicher Strom von Flüssigkeit in dem Hauptauslassrohr (706) aufrechterhalten wird.

2. System (700) zum kontinuierlichen Fördern einer Flüssigkeit durch eine Rohranordnung, wobei das System Folgendes umfasst:
wenigstens einen ersten Vorratstank (10, 30, 40),
wenigstens einen zweiten Vorratstank (10, 30, 40) zum Bevorraten einer Flüssigkeit über einen vorgegebenen Zeitraum, wobei sich der Vorratstank (10, 30, 40) entlang einer längs verlaufenden Mittelachse (LA1) erstreckt, umfassend:
einen Einlass (11, 11a, 11b) zum Aufnehmen der Flüssigkeit,
einen Auslass (12, 12a, 12b) zum Ermöglichen, dass Flüssigkeit aus dem Vorratstank (10, 30, 40) austritt,
wobei sich der Auslass (12, 12a, 12b) auf einer an eine Bodenhöhe (13) des Vorratstanks (10, 30, 40) angrenzenden Höhe in einem Wandabschnitt (14) des Vorratstanks und an einer Stelle befindet, die gegenüber einer Ebene, die die längs verlaufende Mittelachse umfasst, angeordnet ist, und wobei ein kürzester Abstand von dem Einlass (11, 11a, 11b) zu der Ebene gleich einem kürzesten Abstand zwischen dem Einlass (11, 11a, 11b) und der längs verlaufenden Mittelachse ist,
wobei das System ferner ein Haupteinlassumschaltventil (71) umfasst, das dazu ausgelegt ist, zwischen
dem Fördern einer Flüssigkeit aus einem Haupteinlassrohr (701) und weiter zu einem ersten Einlassrohr (702), das mit einem Einlass (11a) des ersten Vorratstanks (10, 30, 40) verbunden ist, und
dem Fördern einer Flüssigkeit aus dem Haupteinlassrohr (701) und weiter zu einem zweiten Einlassrohr (703), das mit dem Einlass (11b) des zweiten Vorratstanks verbunden ist, umzuschalten,
ein erstes Auslassventil (75), das an einem ersten Auslassrohr (705) angeordnet ist, das mit dem Auslass (12a) des ersten Vorratstanks (10, 30, 40) und mit einem Hauptauslassrohr (706) verbunden ist,
ein zweites Auslassventil (73), das an einem zweiten Auslassrohr (704) angeordnet ist, das mit dem Auslass (12b) des zweiten Vorratstanks (30, 40) verbunden ist und mit dem Hauptauslassrohr (706) verbindbar ist,
und zwar auf eine solche Weise, dass durch Steuern des Zustands des ersten Auslassventils (75) und des zweiten Auslassventils (73) ein kontinuierlicher Strom von Flüssigkeit in dem Hauptauslassrohr (706) aufrechterhalten wird.

3. System (700) nach Anspruch 2, wobei der zweite Vorratstank ferner eine Verteilvorrichtung (15) zum gleichmäßigen Abgeben der durch den Einlass (11, 11a, 11b) aufgenommenen Flüssigkeit umfasst, die in dem Vorratstank (30, 40) in einem Abstand von dem Auslass (12, 12a, 12b) angeordnet ist.

4. System (700) nach Anspruch 1 oder 3, wobei die Verteilvorrichtung (15) eine Vielzahl von Durchbohrungen (17) umfasst.

5. System (700) nach Anspruch 4, wobei die Verteilvorrichtung (15) eine vorstehende Kante (151) entlang dem Umfang derselben umfasst, um wenigstens zeitweise ein Volumen von Flüssigkeit in der Verteilvorrichtung (15) zu bevorraten.

6. System (700) nach einem der vorhergehenden Ansprüche, wobei der zweite Vorratstank ferner wenigstens eine Sitzanordnung (16) umfasst, die auf einem Abschnitt der Innenwand (14) des Vorratstanks angeordnet ist, um die Verteilvorrichtung (15) aufzunehmen.

7. System (700) nach einem der Ansprüche 5 bis 6, wobei der zweite Vorratstank ferner ein Flüssigkeitsleitelement (18) umfasst, das angrenzend an den Einlass (11) angeordnet ist, um die aus dem Einlass (11) austretende Flüssigkeit zu der Verteilvorrichtung (15) zu leiten.

8. System (700) nach einem der vorhergehenden Ansprüche, wobei der zweite Vorratstank ferner eine Inspektionstafel (21) umfasst.

9. System (700) nach Anspruch 4, wobei die Größe der Durchbohrungen beruhend auf dem Volumendurchfluss von Flüssigkeit bestimmt ist, die in den Vorratstank eintritt.

10. System (700) nach einem der Ansprüche 4 bis 9, wobei die Vielzahl von Durchbohrungen eine Größe im Bereich von 3 bis 5 mm, wie zum Beispiel 4 mm, aufweist.

11. System (700) nach einem der Ansprüche 4 bis 10, wobei die Anzahl der Vielzahl von Durchbohrungen 350 bis 500 Durchbohrungen für einen Vorratstank beträgt, der 5000 Liter Flüssigkeit pro Stunde aufnimmt.

12. System nach Anspruch 1 oder 2, ferner umfassend eine Steuereinheit, die dazu ausgelegt ist, den Zustand des ersten Auslassventils (75) und des zweiten Auslassventils (73) zu steuern, um einen kontinuierlichen Strom von Flüssigkeit in dem Hauptauslassrohr zu ermöglichen,
wobei eine Änderung des Zustands des ersten Auslassventils (75) oder des zweiten Auslassventils (73) durch ein Steuersignal ausgelöst wird und
wobei die Steuereinheit auf eine solche Weise ausgelegt ist, dass,
wenn das erste Auslassventil (75) gegen das Hauptauslassrohr (706) geschlossen ist und das zweite Auslassventil (73) gegen das Hauptauslassrohr (706) geöffnet ist, die Steuereinheit bei Empfang des Steuersignals dazu ausgelegt ist, das erste Auslassventil (75) für einen ersten Zeitraum zu öffnen, bevor sie das zweite Auslassventil (73) schließt, und
wenn das erste Auslassventil (75) gegen das Hauptauslassrohr (706) geöffnet ist und das zweite Auslassventil (73) gegen das Hauptauslassrohr (706) geschlossen ist, die Steuereinheit bei Empfang des Steuersignals dazu ausgelegt ist, das zweite Auslassventil (73) für einen zweiten voreingestellten Zeitraum zu öffnen, bevor sie das erste Auslassventil (75) schließt.

13. System nach Anspruch 1, 2 oder 12, wobei es sich bei dem zweiten Auslassventil um ein Umschaltventil handelt, das auf schaltbare Weise mit dem Hauptauslassrohr (706) beziehungswiese einem Ablauf (791) verbunden ist.

14. Computerprogrammprodukt, das auf einem computerlesbaren Medium gespeichert ist und einen Softwarecode umfasst, der dazu geeignet ist, die Steuerung des Haupteinlassumschaltventils (71), des ersten Auslassventils (75) und des zweiten Auslassventils (73) nach Anspruch 1, 2, 12 oder 13 auf eine solche Weise zu steuern, dass ein kontinuierlicher Strom von Flüssigkeit in dem Hauptauslassrohr (706) aufrechterhalten wird.

## Revendications

1. Système (700) pour fournir en continu un liquide à travers un agencement de tuyau, le système comprenant:
au moins un premier réservoir de stockage (10, 30, 40),
au moins un second réservoir de stockage (10, 30, 40) pour stocker un liquide sur une période de temps prédéfinie, ledit réservoir de stockage (30, 40) comprenant:
une entrée (11, 11a, 11b) pour recevoir le liquide,
une sortie (12, 12a, 12b) pour permettre au liquide de sortir du réservoir de stockage (30, 40), et
un dispositif de distribution (15) pour disperser uniformément le liquide reçu à travers l'entrée (11, 11a, 11b), et agencé à l'intérieur du réservoir de stockage (30, 40) à une distance éloignée de la sortie (12, 12a, 12b),
ledit système comprenant en outre une soupape de commutation d'entrée principale (71) configurée de manière à commuter entre:
amener un liquide à partir d'un tuyau d'entrée principal (701) et jusqu'à un premier tuyau d'entrée (702) connecté à ladite entrée (11a) du premier réservoir de stockage (10, 30, 40), et
amener un liquide à partir du tuyau d'entrée principal (701) et jusqu'à un second tuyau d'entrée (703) connecté à l'entrée (11b) du second réservoir de stockage,
une première soupape de sortie (75) agencée sur un premier tuyau de sortie (705) connecté à la sortie (12a) du premier réservoir de stockage (10, 30, 40) et à un tuyau de sortie principal (706),
une seconde soupape de sortie (73) agencée sur un second tuyau de sortie (704) connecté à la sortie (12b) du second réservoir de stockage (30, 40), et
connectable au tuyau de sortie principal (706), de telle sorte qu'en commandant l'état de la première soupape de sortie (75) et de la seconde soupape de sortie (73), un écoulement continu de liquide soit maintenu dans le tuyau de sortie principal (706).

2. Système (700) pour fournir en continu un liquide à travers un agencement de tuyau, le système comprenant:
au moins un premier réservoir de stockage (10, 30, 40),
au moins un second réservoir de stockage (10, 30, 40) pour stocker un liquide sur une période de temps prédéfinie, ledit réservoir de stockage (10, 30, 40) s'étendant le long d'un axe central longitudinal (LA1), comprenant:
une entrée (11, 11a, 11b) pour recevoir le liquide,
une sortie (12, 12a, 12b) pour permettre au liquide de sortir du réservoir de stockage (10, 30, 40),
dans lequel la sortie (12, 12a, 12b) est positionnée à un niveau adjacent à un niveau inférieur (13) du réservoir de stockage (10, 30, 40), dans une section de paroi (14) du réservoir de stockage, et à un endroit agencé en opposition à un plan comprenant l'axe central longitudinal, et dans lequel une distance la plus courte entre l'entrée (11, 11a, 11b) et le plan est égale à une distance la plus courte entre l'entrée (11, 11a, 11b) et l'axe central longitudinal,
ledit système comprenant en outre une soupape de commutation d'entrée principale (71) configurée de manière à commuter entre:
amener un liquide à partir d'un tuyau d'entrée principal (701) et jusqu'à un premier tuyau d'entrée (702) connecté à ladite entrée (11a) du premier réservoir de stockage (10, 30, 40), et
amener un liquide à partir du tuyau d'entrée principal (701) et jusqu'à un second tuyau d'entrée (703) connecté à l'entrée (11b) du second réservoir de stockage,
une première soupape de sortie (75) agencée sur un premier tuyau de sortie (705) connecté à la sortie (12a) du premier réservoir de stockage (10, 30, 40) et à un tuyau de sortie principal (706),
une seconde soupape de sortie (73) agencée sur un second tuyau de sortie (704) connecté à la sortie (12b) du second réservoir de stockage (30, 40), et
connectable à le tuyau de sortie principal (706),
de telle sorte qu'en commandant l'état de la première soupape de sortie (75) et de la seconde soupape de sortie (73), un écoulement continu de liquide soit maintenu dans le tuyau de sortie principal (706).

3. Système (700) selon la revendication 2, dans lequel ledit second réservoir de stockage comprend en outre un dispositif de distribution (15) pour disperser uniformément un liquide reçu à travers l'entrée (11, 11a, 11b), et agencé à l'intérieur du réservoir de stockage (30, 40) à une distance éloignée d'une sortie (12, 12a, 12b).

4. Système (700) selon la revendication 1 ou 3, dans lequel le dispositif de distribution (15) comporte une pluralité de perforations (17).

5. Système (700) selon la revendication 4, dans lequel le dispositif de distribution (15) comporte un bord saillant (151) le long de la circonférence de celui-ci pour contenir, au moins temporairement, un volume de liquide à l'intérieur du dispositif de distribution (15).

6. Système (700) selon l'une quelconque des revendications précédentes, dans lequel ledit second réservoir de stockage comprend en outre au moins un ensemble de siège (16) agencé sur une section de paroi intérieure (14) du réservoir de stockage pour recevoir le dispositif de distribution (15).

7. Système (700) selon l'une quelconque des revendications 5 à 6, comprenant en outre un élément de direction de liquide (18) agencé à proximité de l'entrée (11) afin de diriger le liquide sortant de l'entrée (11) jusqu'au dispositif de distribution (15).

8. Système (700) selon l'une quelconque des revendications précédentes, dans lequel ledit second réservoir de stockage comprend en outre un panneau d'inspection (21).

9. Système (700) selon la revendication 4, dans lequel la taille des perforations est déterminée sur la base du débit volumique de liquide qui entre dans le réservoir de stockage.

10. Système (700) selon l'une quelconque des revendications 4 à 9, dans lequel la pluralité de perforations présentent une taille comprise dans la gamme de 3 à 5 mm, telle que 4 mm.

11. Système (700) selon l'une quelconque des revendications 4 à 10, dans lequel le nombre de la pluralité de perforations est de 350 à 500 perforations pour un réservoir de stockage qui reçoit 5000 litres de liquide par heure.

12. Système selon la revendication 1 ou 2, comprenant en outre une unité de commande, configurée de manière à commander l'état de la première soupape de sortie (75) et de la seconde soupape de sortie (73) de manière à permettre un écoulement continu de liquide dans le tuyau de sortie principal,
dans lequel un changement d'état de la première soupape de sortie (75) ou de la seconde soupape de sortie (73) est déclenché par un signal de commande, et
dans lequel l'unité de commande est configurée de telle sorte que
lorsque la première soupape de sortie (75) est fermée au tuyau de sortie principal (706) et que la seconde soupape de sortie (73) est ouverte au tuyau de sortie principal (706), lors de la réception du signal de commande, l'unité de commande est configurée de manière à ouvrir la première soupape de sortie (75) pendant une première période de temps avant la fermeture de la seconde soupape de sortie (73), et
lorsque la première soupape de sortie (75) est ouverte au tuyau de sortie principal (706) et que la seconde soupape de sortie (73) est fermée au tuyau de sortie principal (706), lors de la réception du signal de commande, l'unité de commande est configurée de manière à ouvrir la seconde soupape de sortie (73) pendant une seconde période de temps prédéfinie avant la fermeture de la première soupape de sortie (75).

13. Système selon la revendication 1, 2 ou 12, dans lequel la seconde soupape de sortie est une soupape de commutation qui est connectée de façon commutable au tuyau de sortie principal (706) et à un drain (791), respectivement.

14. Produit de programme d'ordinateur stocké sur un support lisible par un ordinateur, comprenant un code logiciel adapté pour commander le fonctionnement de la soupape de commutation d'entrée principale (71), de la première soupape de sortie (75) et de la seconde soupape de sortie (73) selon les revendications 1, 2, 12 ou 13 de telle sorte qu'un écoulement continu de liquide soit maintenu dans le tuyau de sortie principal (706).
